(19) Europäisches Patentamt
European Patent Office
Office européen des brevets

(11) **EP 4 230 676 A1**

(12) **EUROPEAN PATENT APPLICATION**
published in accordance with Art. 153(4) EPC

(43) Date of publication:
**23.08.2023   Bulletin 2023/34**

(21) Application number: **21880204.9**

(22) Date of filing: **14.10.2021**

(51) International Patent Classification (IPC):
*C08G 59/42* (2006.01)      *C08K 5/098* (2006.01)
*C08L 67/02* (2006.01)      *C09J 167/02* (2006.01)
*C08G 63/91* (2006.01)

(52) Cooperative Patent Classification (CPC):
**C08G 59/42; C08G 63/91; C08K 5/098;
C08L 67/02; C09J 167/02**

(86) International application number:
**PCT/JP2021/038127**

(87) International publication number:
**WO 2022/080469 (21.04.2022 Gazette 2022/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.10.2020   JP 2020174488**

(71) Applicant: **TOYOBO CO., LTD.**
**Osaka-shi**
**Osaka 5300001 (JP)**

(72) Inventors:
• **UCHIYAMA, Shoko**
  **Otsu-shi, Shiga 520-0292 (JP)**
• **HAYASHI, Mikihiro**
  **Nagoya-shi, Aichi 466-8555 (JP)**

(74) Representative: **Müller-Boré & Partner**
**Patentanwälte PartG mbB**
**Friedenheimer Brücke 21**
**80639 München (DE)**

(54) **CROSSLINKED AROMATIC POLYESTER RESIN COMPOSITION AND PRODUCTION METHOD THEREFOR**

(57)     An object is to provide a crosslinked aromatic polyester resin composition that has high strength at room temperature and is capable of reprocessing, adhering films to each other, and self-repairing at a bond exchange activation temperature thereof or higher, due to "dynamic" covalent crosslinks allowing bond exchange at high temperatures.

A crosslinked aromatic polyester resin composition, comprising a crosslinked aromatic polyester resin (C), and a transesterification catalyst (D), wherein the crosslinked aromatic polyester resin composition satisfies the following requirements (1) and (2):

(1) the crosslinked aromatic polyester resin (C) is a reaction product of an aromatic polyester resin (A) having a carboxy group on a side chain and an epoxy compound (B), and

(2) when the crosslinked aromatic polyester resin composition is measured by infrared spectroscopy, a ratio $(A_{3200-3600}/A_{1730})$ of an absorbance $(A_{3200-3600})$ of a peak, around wave number of 3200 to 3600 cm$^{-1}$, derived from a hydroxyl group to an absorbance $(A_{1730})$ of a peak, around wave number of 1730 cm$^{-1}$, derived from an ester bond is not lower than 0.005 and not higher than 0.038.

EP 4 230 676 A1

**Description**

TECHNICAL FIELD

The present invention relates to a crosslinked aromatic polyester resin composition that exhibits self-adhesiveness, remoldability, and self-repairing properties under a high-temperature condition, and a preparation method therefor. More specifically, the present invention relates to an aromatic polyester composition that has a stable crosslinked polymer network at room temperature and that has a feature of activating an intermolecular bond exchange reaction and softening a sample thereof at high temperatures.

BACKGROUND ART

Crosslinked polyesters obtained by curing an epoxy compound and an aromatic polyester having a carboxy group on a side chain have been conventionally used in the fields of adhesives and paints, but due to the irreversibility of covalent crosslinking points, such crosslinked polyesters have no adhesiveness, remolding processability, and repairing properties. On the other hand, films in which bond-exchange type dynamic bond crosslinks are introduced can adhere films to each other without using any adhesive, and such films can suppress elution of foreign matter, residual solvents, etc., originating from adhesives and can have excellent safety. Furthermore, aromatic polyesters have excellent heat resistance and chemical resistance, and thus are particularly industrially useful.

A crosslinked polyester resin obtained by mixing and heating an aliphatic polyester having a carboxy group on a side chain, an aliphatic diepoxy having epoxy groups at both ends, and zinc acetate to perform crosslinking has been reported (Patent Document 1).

A resin composition obtained by mixing and heating a thermoplastic resin having a hydroxy group, a thermoplastic resin having an ester bond, and a transesterification catalyst to perform crosslinking has been reported (Patent Document 2).

PRIOR ART DOCUMENTS

PATENT DOCUMENTS

    Patent Document 1: WO2020/045439
    Patent Document 2: JP-A-2020-23591

DISCLOSURE OF THE INVENTION

PROBLEMS TO BE SOLVED BY THE INVENTION

However, as for the crosslinked polyester resin of Patent Document 1, using an aliphatic polyester having a carboxy group in a molecule as a base polymer is considered, but no aromatic polyester is taken into consideration. An example of the reason for this is the following technical reason. Patent Document 1 describes a method in which a polyester precursor having a thiol group on a side chain is synthesized by melt polycondensation of a diol component with thiomalic acid which is a dicarboxylic acid having a thiol group on a side chain, and a polyester resin having a carboxy group on a side chain is obtained by a Michael addition reaction of the precursor with acrylic acid. However, in the case of a method of direct polymerization of a dicarboxylic acid and a diol, an esterification reaction of an aromatic dicarboxylic acid having a melting point of 300°C or higher and a diol is generally carried out at a high temperature (e.g., 200 to 240°C) equal to or higher than the boiling point of the diol, energy consumption during polycondensation is high, and terephthalic acid and isophthalic acid, which are commonly used as raw materials for aromatic polyesters, each have a melting point of 300°C or higher, and are difficult to handle since these acids are sublimable crystals. Also, in Patent Document 2, resin powders of a thermoplastic resin having a hydroxy group and a thermoplastic resin having an ester bond are produced, and mixed with a transesterification catalyst, and a flat plate is produced using an injection molding machine, but such production is substantially achieved only with acrylic resins, and acrylic resins have a problem of low heat resistance.

An object of the present invention is to provide a crosslinked aromatic polyester resin composition that contains an aromatic polyester as a base polymer, that has high strength at room temperature and is capable of reprocessing, adhering films to each other, and self-repairing at a bond exchange activation temperature thereof or higher, due to "dynamic" covalent crosslinks allowing bond exchange at high temperatures, and that further has excellent heat resistance by containing an aromatic component, which has been difficult to achieve so far.

SOLUTIONS TO THE PROBLEMS

As a result of extensive investigations, the present inventors have found that the above problems can be solved by the following means and achieved the present invention. Thus, the present invention comprises the following constitutions.

A crosslinked aromatic polyester resin composition, comprising

a crosslinked aromatic polyester resin (C), and
a transesterification catalyst (D), wherein
the crosslinked aromatic polyester resin composition satisfies the following requirements (1) and (2):

(1) the crosslinked aromatic polyester resin (C) is a reaction product of an aromatic polyester resin (A) having a carboxy group on a side chain and an epoxy compound (B), and
(2) when the crosslinked aromatic polyester resin composition is measured by infrared spectroscopy, a ratio ($A_{3200\text{-}3600}/A_{1730}$) of an absorbance ($A_{3200\text{-}3600}$) of a peak, around wave number of 3200 to 3600 $cm^{-1}$, derived from a hydroxyl group to an absorbance ($A_{1730}$) of a peak, around wave number of 1730 $cm^{-1}$, derived from an ester bond is not lower than 0.005 and not higher than 0.038.

The aromatic polyester resin (A) having a carboxy group on a side chain preferably has an acid value of not lower than 5 mg KOH/g and not higher than 120 mg KOH/g, and a number average molecular weight of not lower than 8000.
A molar ratio (carboxy group : epoxy group) of the carboxy group of the aromatic polyester resin (A) having the carboxy group on a side chain to the epoxy group of the epoxy compound (B) is preferably 100:50 to 100:150.
The epoxy compound (B) preferably has a number average molecular weight of not lower than 100 and not higher than 500.
A molar ratio (carboxy group : transesterification catalyst) of the carboxy group of the aromatic polyester resin (A) to the transesterification catalyst (D) is preferably 100: 10 to 100:40.
A method for preparing a crosslinked aromatic polyester resin composition, the method comprising mixing and heating an aromatic polyester resin (A) having a carboxy group on a side chain and having an acid value of not lower than 5 mg KOH/g and not higher than 120 mg KOH/g, an epoxy compound (B), and a transesterification catalyst (D) to perform crosslinking.
A self-adhesive agent, a self-repairing material or a molding material contain the crosslinked aromatic polyester resin composition.

EFFECTS OF THE INVENTION

The crosslinked aromatic polyester resin composition of the present invention has "dynamic" covalent crosslinks allowing bond exchange at high temperatures. Thus, it has high strength at room temperature and is capable of reprocessing and adhering films to each other at a bond exchange activation temperature thereof or higher. Furthermore, molding or thin film formation after a crosslinking reaction is allowed by the remolding processability of the crosslinked aromatic polyester resin composition, and scratches can be repaired due to the self-repairing properties of the crosslinked aromatic polyester resin composition, so that semi-permanent use is enabled.

MODE FOR CARRYING OUT THE INVENTION

The crosslinked aromatic polyester resin composition is a resin composition containing: a crosslinked aromatic polyester resin (C) which is a reaction product of an aromatic polyester resin (A) having a carboxy group on a side chain (hereinafter, simply referred to as "aromatic polyester resin (A) having a carboxy group on a side chain" or "polyester resin (A)") and an epoxy compound (B); and a transesterification catalyst (D).

<Aromatic Polyester Resin (A) Having Carboxy Group on Side Chain>

The aromatic polyester resin (A) having a carboxy group on a side chain is a resin having a carboxy group on a side chain of an aromatic polyester resin. Here, the side chain may have a structure having a carboxy group on a substituent (e.g., an aliphatic hydrocarbon group, an aromatic hydrocarbon group, an alicyclic hydrocarbon group, etc.) branched from the main chain of an aromatic polyester resin, or may have a structure having a carboxy group directly on an aromatic polyester resin. The side chain preferably has a structure having a carboxy group directly on an aromatic polyester resin.

The polyester resin (A) preferably has an acid value of not lower than 5 mg KOH/g. The acid value is more preferably not lower than 10 mg KOH/g and further preferably not lower than 15 mg KOH/g, since sufficient crosslinking is achieved and heat resistance is improved. In addition, the acid value is preferably not higher than 120 mg KOH/g. The acid value is more preferably not higher than 110 mg KOH/g and further preferably not higher than 100 mg KOH/g, since excessive hardening, of a coating film obtained from the crosslinked aromatic polyester resin composition, due to the crosslink density becoming excessively high, is suppressed.

The polyester resin (A) preferably has an ester bond and a carboxy group at multiple points in a molecule. In particular, the polyester resin (A) has more preferably two or more carboxy groups, further preferably three or more carboxy groups, and further preferably four or more carboxy groups, in a molecular chain. The upper limit of the number of carboxy groups per molecular chain ($N_{COOH}$) is not particularly limited, but only needs to be not larger than 50 and may be not larger than 30.

The aromatic polyester resin (A) having a carboxy group on a side chain has a number average molecular weight (Mn) of preferably not lower than 8000, more preferably not lower than 10000, and further preferably not lower than 12000. In addition, the number average molecular weight is preferably not higher than 30000, more preferably not higher than 25000, and further preferably not higher than 20000. When the number average molecular weight is set to be in the above range, it is easier to control the acid value of the polyester resin (A).

The polyester resin (A) has a glass transition temperature of preferably not lower than -10°C, more preferably not lower than 0°C, and further preferably not lower than 5°C. In addition, the glass transition temperature is preferably not higher than 100°C, more preferably not higher than 80°C and further preferably not higher than 60°C.

The aromatic polyester resin (A) having a carboxy group on a side chain needs to have a side chain (hereinafter, also referred to as branched structure) and an aromatic group in a molecule. In order for the polyester resin (A) to have a branched structure and an aromatic group, a copolymerization component that is a material of the polyester resin (A) preferably has a branched structure and an aromatic group. The polyester resin (A) may be (i) a resin obtained by reacting (copolymerizing) a polymer polyol with a chain extender or the like, or may be (ii) a resin obtained by adding a monomer having a carboxy group to a polyester having a reaction site obtained by a reaction of a polycarboxylic acid component and a polyalcohol component.

In the case of (i), at least one of the polymer polyol and/or the chain extender may have a branched structure, and the other thereof may have an aromatic group, or said one thereof may have both a branched structure and an aromatic group. One polymer polyol may be used, or two or more polymer polyols may be used in combination. In the case where two or more polymer polyols are used in combination, one polymer polyol may have a branched structure, and another polymer polyol may have an aromatic group, or the one polymer polyol may have both a branched structure and an aromatic group. Also, in the case of (ii), at least one of the polyester and/or the additional monomer having a carboxy group may have an aromatic group, and both may have an aromatic group.

The polycarboxylic acid component used in the aromatic polyester resin (A) having a carboxy group on a side chain is preferably an aromatic dicarboxylic acid component. The aromatic dicarboxylic acid component is not particularly limited, and there may be exemplified terephthalic acid, isophthalic acid, orthophthalic acid, naphthalene-dicarboxylic acid, biphenyl dicarboxylic acid and diphenic acid. There may be also exemplified an aromatic dicarboxylic acid having a sulfonic acid group such as sulfoterephthalic acid, 5-sulfo-isophthalic acid, 4-sulfophthalic acid, 4-sulfonaphthalene-2,7-dicarboxylic acid, 5-(4-sulfophenoxy)-isophthalic acid and sulfoterephthalic acid, and an aromatic dicarboxylic acid having a sulfonic acid base such as metal salt, ammonium salt, etc. thereof. One or more member(s) can be selected therefrom. Among them, terephthalic acid, isophthalic acid, or mixtures thereof is particularly preferred because it increases the cohesion of the coating film.

Another example of another polycarboxylic acid component is alicyclic dicarboxylic acids such as 1,4-cyclohexanedicarboxylic acid, 1,3-cyclohexanedicarboxylic acid, 1,2-cyclohexanedicarboxylic acid and anhydrides thereof; aliphatic dicarboxylic acids such as succinic acid, adipic acid, azelaic acid, sebacic acid, dodecanedioic acid, dimer acid; and unsaturated bond-containing dicarboxylic acids such as maleic acid, fumaric acid and their anhydrides. In addition, oxycarboxylic acid compounds having a hydroxyl group and a carboxy group in a molecular structure, such as 5-hydroxyisophthalic acid, p-hydroxybenzoic acid, p-hydroxyphenethyl alcohol, p-hydroxyphenylpropionic acid, p-hydroxyphenylacetic acid, 6-hydroxy-2-naphthoic acid, and 4,4-bis(p-hydroxyphenyl)valeric acid, and thiomalic acid having a thiol group in a molecular structure can also be used.

The polyalcohol component used for the aromatic polyester resin (A) having a carboxy group on a side chain is preferably a glycol component. The glycol component is preferably an aliphatic glycol, an alicyclic glycol, an aromatic-containing glycol, or an ether bond-containing glycol.

As to examples of the aliphatic glycol, there may be exemplified ethylene glycol, 1,2-propylene glycol, 1,3-propanediol, 1,4-butanediol, 2-methyl-1,3-propanediol, 2-methyl-1,3-butanediol, 1,5-pentanediol, 2,2-dimethyl-1,3-propanediol, 1,6-hexanediol, 3-methyl-1,5-pentanediol, 1,9-nonanediol, 2-ethyl-2-butylpropanediol(DMH), hydroxypivalic acid neopentyl glycol ester, dimethylolheptane, 2,2,4-trimethyl-1,3-pentanediol, etc.

As to examples of the alicyclic glycol, there may be exemplified 1,4-cyclohexanediol, 1,4-cyclohexanedimethanol, tricyclodecane diol, tricyclodecane dimethylol, spiroglycol, hydrogenated bisphenol A, an adduct of hydrogenated bisphenol A with ethylene oxide or with propylene oxide, etc.

As to examples of the aromatic-containing glycol, there may be exemplified p-xylene glycol, m-xylene glycol, o-xylene glycol, 1,4-phenylene glycol, an adduct of 1,4-phenylene glycol with ethylene oxide, bisphenol A, a glycol prepared by addition of one to several mole (s) of ethylene oxide or propylene oxide to each of two phenolic hydroxyl groups of bisphenols such as an adduct of bisphenol A with ethylene oxide and an adduct of propylene oxide, etc. Also, specific examples of glycol-modified products of aromatic dicarboxylic acids include, but are not limited to, bis-2-hydroxyethyl terephthalate (BHET), which is an ethylene glycol-modified product of terephthalic acid, propylene glycol-modified products of terephthalic acid, ethylene glycol-modified products of isophthalic acid, propylene glycol-modified products of isophthalic acid, ethylene glycol-modified products of orthophthalic acid, propylene glycol-modified products of orthophthalic acid, etc. Furthermore, other examples of glycol-modified products of aromatic dicarboxylic acids include glycol-modified products of aromatic dicarboxylic acids having a sulfonic acid group or a sulfonic acid salt group, etc., such as naphthalene dicarboxylic acid, biphenyldicarboxylic acid, diphenic acid, 5-hydroxyisophthalic acid, sulfoterephthalic acid, 5-sulfoisophthalic acid, 4-sulfophthalic acid, 4-sulfonaphthalene-2,7-dicarboxylic acid, 5-(4-sulfophenoxy)isophthalic acid, sulfoterephthalic acid, and/or metal salts thereof and ammonium salts thereof, etc.

As to examples of the ether bond-containing glycol, there may be used diethylene glycol, triethylene glycol, dipropylene glycol, polyethylene glycol, polypropylene glycol, polytetramethylene glycol, an addict of neopentyl glycol with ethylene oxide or an adduct of neopentyl glycol with propylene oxide.

One or more member(s) can be selected therefrom.

The polymer polyol used for the aromatic polyester resin (A) having a carboxy group on a side chain is preferably a copolymer (polymer polyester polyol) of the polycarboxylic acid component and the polyol component. In addition, in order to impart an acid value to the polymer polyol, acid addition with a trifunctional or more polycarboxylic acid compound is also preferably performed.

As to the polycarboxylic acid component having three or more functional groups, there may be exemplified trimellitic acid, trimesic acid, ethylene glycol bis(anhydrotrimellitate), glycerol tris(anhydrotrimellitate), trimellitic anhydride, pyromellitic dianhydride (PMDA), oxydiphthalic acid dianhydride (ODPA), 3,3',4,4'-benzophenone tetracarboxylic acid dianhydride (BTDA), 3,3',4,4'-diphenyl-tetracarboxylic acid dianhydride (BPDA), 3,3',4,4'-diphenylsulfone tetracarboxylic acid dianhydride (DSDA), 4,4'-(hexafluoroisopropylidene)diphthalic acid dianhydride (6FDA), 2,2'-bis[(dicarboxyphenoxy)phenyl]propane dianhydride (BSAA), etc. On the other hand, as to the polyol having three or more functional groups, there may be exemplified glycerol, trimethylol ethane, trimethylol propane and pentaerythritol, etc.

The polymer polyol has a number average molecular weight (Mn) of preferably not lower than 1000, more preferably not lower than 2000, and further preferably not lower than 3000. In addition, the number average molecular weight is preferably not higher than 30000, more preferably not higher than 25000, and further preferably not higher than 20000.

The polymer polyol has an acid value of preferably not lower than 0.1 mg KOH/g, more preferably not lower than 0.2 mg KOH/g, and further preferably not lower than 0.3 mg KOH/g. In addition, the acid value is preferably not higher than 20 mg KOH/g, more preferably not higher than 15 mg KOH/g, and further preferably not higher than 10 mg KOH/g.

The polymer polyol has a glass transition temperature of preferably not lower than -10°C, more preferably not lower than 0°C, and further preferably not lower than 5°C. In addition, the glass transition temperature is preferably not higher than 100°C, more preferably not higher than 80°C and further preferably not higher than 60°C.

The chain extender is not particularly limited, and examples of the chain extender include tetracarboxylic dianhydrides.

Examples of tetracarboxylic dianhydrides include aromatic tetracarboxylic dianhydrides, aliphatic tetracarboxylic dianhydrides, or alicyclic tetracarboxylic dianhydrides, and aromatic tetracarboxylic dianhydrides are preferable. Specific examples of tetracarboxylic dianhydrides include pyromellitic dianhydride (PMDA), oxydiphthalic dianhydride (ODPA), 3,3',4,4'-benzophenone tetracarboxylic dianhydride (BTDA), 3,3',4,4'-diphenyltetracarboxylic dianhydride (BPDA), 3,3',4,4'-diphenylsulfone tetracarboxylic dianhydride (DSDA), 4,4'-(hexafluoroisopropylidene)diphthalic dianhydride (6FDA), and 2,2'-bis[(dicarboxyphenoxy)phenyl]propane dianhydride (BSAA). These tetracarboxylic dianhydrides can be used individually, or two or more of these tetracarboxylic dianhydrides can be used in combination. Among them, pyromellitic dianhydride is preferable.

As for the copolymerization ratio between the polymer polyol and the chain extender, the amount of the chain extender per 100 parts by mass of the polymer polyol is preferably not smaller than 0.5 parts by mass, more preferably not smaller than 1 part by mass, and further preferably not smaller than 2 parts by mass. In addition, the amount of the chain extender per 100 parts by mass of the polymer polyol is preferably not larger than 20 parts by mass, more preferably not larger than 15 parts by mass, and further preferably not larger than 10 parts by mass.

As the aromatic polyester resin (A) having a carboxy group on a side chain, a polyester having a carboxy group at multiple points is preferably used. There are two methods for introducing an acid value to the polyester resin (A).

The first method is to introduce a carboxylic acid to a polyester polyol by acid addition after polymerization. When a monocarboxylic acid, a dicarboxylic acid, or a trifunctional or more polycarboxylic acid compound is used for acid addition, the molecular weight may be decreased by transesterification, so that a compound having at least one carboxylic anhydride group is preferably used.

Examples of carboxylic anhydrides include succinic anhydride, maleic anhydride, phthalic anhydride, 2,5-norbomenedicarboxylic anhydride, tetrahydrophthalic anhydride, trimellitic anhydride, pyromellitic dianhydride (PMDA), oxydiphthalic dianhydride (ODPA), 3,3',4,4'-benzophenone tetracarboxylic dianhydride (BTDA), 3,3',4,4'-diphenyltetracarboxylic dianhydride (BPDA), 3,3',4,4'-diphenylsulfone tetracarboxylic dianhydride (DSDA), 4,4'-(hexafluoroisopropylidene)diphthalic dianhydride (6FDA), 2,2'-bis[(dicarboxyphenoxy)phenyl]propane dianhydride (BSAA), etc.

In the second method, a polyester precursor having a double bond site at multiple points is obtained by melt polycondensation in which a glycol-modified product of an aromatic dicarboxylic acid is used as a diol component and maleic acid is used as a dicarboxylic acid component. When the precursor is reacted with, for example, thioglycolic acid, a polyester resin (A) having a carboxy group at multiple points on a side chain can be obtained by a Michael addition reaction between a double bond site derived from maleic acid and a thiol group.

<Epoxy Compound (B)>

The epoxy compound (B) is not particularly limited, and is preferably a compound having two or more epoxy groups in a molecule. The compound (epoxy crosslinking agent) having two or more epoxy groups in a molecule is not particularly limited as long as the compound causes a curing reaction with the carboxy group of the polyester resin (A) to perform crosslinking, and a polyfunctional epoxy compound having a plurality of epoxy groups in one molecule is preferable. By using the polyfunctional epoxy compound, three-dimensional crosslinks are easily formed in a cured coating film obtained from the crosslinked aromatic polyester resin composition, so that it is possible to improve heat resistance.

Examples of the polyfunctional epoxy compound include cresol novolac-type epoxy compounds, epoxy compounds having a dicyclopentadiene skeleton, and phenolic novolac-type epoxy compounds. These polyfunctional epoxy compounds can be used individually, or two or more of these polyfunctional epoxy compounds can be used in combination.

Furthermore, in addition to the above polyfunctional epoxy compound, an epoxy compound containing a nitrogen atom can also be used. When the epoxy compound containing a nitrogen atom is also used, a coating film of the resin composition can be brought into a semi-cured state by heating at a relatively low temperature, and an effect of suppressing foaming can be expected, so that the use of such an epoxy compound is preferable.

Examples of the epoxy compound containing a nitrogen atom may be glycidyl amine type such as tetraglycidyl diaminodiphenylmethane, triglycidyl-para-aminophenol, tetraglycidyl-bis-aminomethyl cyclohexanone, and N,N,N',N'-tetraglycidyl-m-xylene diamine.

Examples of commercially available products of the epoxy compound containing a nitrogen atom include "TETRAD-X" (trade name) manufactured by MITSUBISHI GAS CHEMICAL COMPANY, INC., "jER630" (trade name) manufactured by Mitsubishi Chemical Corporation, etc.

Other epoxy compound can also be used in combination as an epoxy compound (B) used for the present invention. Examples of the other epoxy compound may be a glycidyl ether type such as bisphenol A diglycidyl ether, bisphenol S diglycidyl ether, novolak glycidyl ether, bromized bisphenol A diglycidyl ether; a glycidyl ester type such as hexahydrophthalic glycidyl ester and dimer acid glycidyl ester; or alicyclic or aliphatic epoxide such as triglycidyl isocyanurate, 3,4-epoxy cyclohexyl methyl carboxylate, epoxidized polybutadiene and epoxidized soybean oil. One or more member(s) can be selected therefrom.

From the viewpoint of crosslink density, the epoxy compound (B) has a number average molecular weight (Mn) of preferably not lower than 100 and not higher than 500, and more preferably not lower than 200 and not higher than 400.

<Crosslinked Aromatic Polyester Resin (C)>

The crosslinked aromatic polyester resin (C) is a reaction product of the polyester resin (A) and the epoxy compound (B). The reaction may be carried out under a solvent-free condition, or may be carried out in the presence of an organic solvent.

The organic solvent is not particularly limited as long as the organic solvent does not react with the polyester resin (A), the epoxy compound (B), and the crosslinked aromatic polyester resin (C), and examples of the organic solvent include aromatic organic solvents such as toluene and xylene, aliphatic organic solvents such as heptane and octane, ether-based solvents such as tetrahydrofuran and diethyl ether, and amide-based solvents such as dimethylformamide and N-methylpyrrolidone. These organic solvents can be used individually, or two or more of these organic solvents can be used in combination.

A reaction temperature is preferably not lower than 80°C, more preferably not lower than 100°C, and further preferably not lower than 120°C. In addition, the reaction temperature is preferably not higher than 200°C, more preferably not higher than 180°C, and further preferably not higher than 160°C.

A reaction time depends on the reaction temperature, and is preferably not shorter than 30 minutes, more preferably not shorter than 1 hour, and further preferably not shorter than 2 hours. In addition, the reaction time is preferably not longer than 10 hours, more preferably not longer than 8 hours, and further preferably not longer than 5 hours.

The mixing ratio between the polyester resin (A) and the epoxy compound (B) can be determined based on the functional group molar ratio between the carboxy group on the side chain of the polyester resin (A) and the epoxy group of the epoxy compound (B). From the viewpoint of crosslinking reaction efficiency, the ratio of the carboxy group of the polyester resin (A) to the epoxy group of the epoxy compound (B) (carboxy group : epoxy group) is preferably 100:50 to 100:150 (parts by mole) and more preferably 100:80 to 100:120 (parts by mole).

<Transesterification Catalyst (D)>

The transesterification catalyst (D) is a transesterification catalyst for the ester group in the polyester resin (A). By the transesterification catalyst (D), "dynamic" covalent crosslinks allowing bond exchange at high temperatures are formed in the crosslinked aromatic polyester resin composition of the present invention, whereby the crosslinked aromatic polyester resin composition has high strength at room temperature, and is capable of reprocessing and adhering films to each other at an ester bond exchange activation temperature thereof or higher. Furthermore, molding or thin film formation after a crosslinking reaction is allowed by the remolding processability of the crosslinked aromatic polyester resin composition, and scratches can be repaired due to the self-repairing properties of the crosslinked aromatic polyester resin composition, so that semi-permanent use is enabled. The ester bond exchange activation temperature of the crosslinked aromatic polyester resin composition can be obtained as a softening temperature, based on the inflection point of linear expansion coefficient change.

Examples of the transesterification catalyst (D) include zinc acetate, triphenylphosphine, 1,5,7-triazabicyclo[4.4.0]deca-5-ene, 1,8-diazabicyclo[5.4.0]undecen-7, etc. Among them, zinc acetate is preferable.

From the viewpoint of mechanical strength of the polyester resin (A) and uniformity of a sample, the mixing amount of the transesterification catalyst (D) per 100 parts by mole of the carboxy group of the polyester resin (A) is preferably 10 parts by mole to 40 parts by mole, and more preferably 15 parts by mole to 30 parts by mole.

<Crosslinked Aromatic Polyester Resin Composition>

The crosslinked aromatic polyester resin composition is a composition containing the crosslinked aromatic polyester resin (C) and the transesterification catalyst (D).

When the crosslinked aromatic polyester resin composition is measured by infrared spectroscopy, the ratio $(A_{3200-3600}/A_{1730})$ of an absorbance $(A_{3200-3600})$ of a peak, around wave number of 3200 to 3600 $cm^{-1}$, derived from a hydroxyl group to an absorbance $(A_{1730})$ of a peak, around wave number of 1730 $cm^{-1}$, derived from an ester bond is not lower than 0.005 and not higher than 0.038. The ratio $(A_{3200-3600}/A_{1730})$ is preferably not lower than 0.007 and more preferably not lower than 0.01, since self-repairing properties, remoldability, and scratch-repairing properties become good. In addition, the ratio $(A_{3200-3600}/A_{1730})$ is preferably not higher than 0.035 and more preferably not higher than 0.03. The measurement method by infrared spectroscopy is as described in EXAMPLES.

An example of a method for preparing the crosslinked aromatic polyester resin composition will be described. The crosslinked aromatic polyester resin composition can be obtained by mixing and heating the polyester resin (A), the epoxy compound (B), and the transesterification catalyst (D) to perform a crosslinking reaction via an epoxy ring-opening reaction. The order of mixing the polyester resin (A), the epoxy compound (B), and the transesterification catalyst (D) is not particularly limited, and preferably, the polyester resin (A) and the epoxy compound (B) are mixed, then the transesterification catalyst (D) is added, and a crosslinking reaction is performed.

The crosslinked aromatic polyester resin composition has a softening temperature of preferably not lower than 100°C, more preferably not lower than 110°C, and further preferably not lower than 120°C. The upper limit of the softening temperature is not particularly limited, and the softening temperature is industrially preferably not higher than 300°C, and may be not higher than 250°C.

The temperature (5% weight loss temperature) at which the weight of the crosslinked aromatic polyester resin composition is reduced by 5% when the crosslinked aromatic polyester resin composition is heated is not lower than 230°C, preferably not lower than 250°C, more preferably not lower than 280°C, and further preferably not lower than 300°C. The upper limit of the 5% weight loss temperature is not particularly limited, and the 5% weight loss temperature is industrially preferably not higher than 500°C, and may be not higher than 450°C. The 5% weight loss temperature can be used as an index of heat resistance.

Molded articles made of the crosslinked aromatic polyester resin composition can have various shapes, and from the viewpoint of maintaining a sufficient adhesive area, a film shape is preferable. That is, the crosslinked aromatic polyester resin composition of the present invention can be used as an adhesive having a film shape, and can be used as an adhesive for resin films, an adhesive for metal foils, an adhesive for a resin film and a metal foil, etc. Examples of resin films include polyimide films, polyester films, PET films, etc. Examples of metal foils include copper foil, silver foil, gold foil, etc. The adhesiveness of the crosslinked aromatic polyester resin composition can be evaluated based on 90° peel strength shown in EXAMPLES.

Since bond exchange is enabled by heating the crosslinked aromatic polyester resin composition to the ester bond exchange activation temperature or higher, when the crosslinked aromatic polyester resin composition is used as a material for an adhesive, the adhesive is easily peeled by heating the adhesive to the ester bond exchange activation temperature or higher. Therefore, the crosslinked aromatic polyester resin composition can be used as a material for an adhesive for paste-and-remove type repair applications. The peelability of the crosslinked aromatic polyester resin composition when heated to a high temperature can be evaluated based on 90° peel strength upon heating shown in EXAMPLES.

The crosslinked aromatic polyester resin composition can be used as a laminate material. Since the crosslinked aromatic polyester resin composition has heat resistance, for example, when a film for which the crosslinked aromatic polyester resin composition is used is attached and adhered to the surface of a resin molded article or a metal molded article to form a laminate, the heat resistance of the resin molded article or the metal molded article can be improved. The effect as a laminate material can be evaluated based on solder heat resistance shown in EXAMPLES.

Even when the crosslinked aromatic polyester resin composition is immersed in a solvent (especially, an organic solvent), the crosslinked aromatic polyester resin composition is not easily dissolved therein, so that the crosslinked aromatic polyester resin composition has good solvent resistance. Therefore, the crosslinked aromatic polyester resin composition is suitable for use, for example, as a laminate material.

The crosslinked aromatic polyester resin composition has good room temperature storage stability. That is, even when the crosslinked aromatic polyester resin composition is stored at a predetermined temperature for a predetermined period of time, the gel fraction of the crosslinked aromatic polyester resin composition hardly changes. In addition, even when the crosslinked aromatic polyester resin composition is stored at a predetermined temperature for a predetermined period of time, the crosslinked aromatic polyester resin composition exhibits softening behavior similar to that before the storage.

The crosslinked aromatic polyester resin composition can be used as a main component of a self-adhesive agent, a self-repairing material, or a molding material.

The self-repairing material can be used, for example, as a material for paints.

The crosslinked aromatic polyester resin composition has good molding processability and extrudability, and thus is useful as a molding material and can be used, for example, as a material for 3D printers or a material for thread-like molded articles.

The crosslinked aromatic polyester resin composition can also be used as a material for reticular structures. A reticular structure is a structure in which portions of thread-like molded articles are connected to each other. A reticular structure can be produced by melting the crosslinked aromatic polyester resin composition, discharging the melted matter through a nozzle, and solidifying the discharged matter while welding the discharged matter.

The content of the crosslinked aromatic polyester resin composition in the solid content of the self-adhesive, the self-repairing material, or the molding material is preferably not lower than 60% by mass, more preferably not lower than 80% by mass, and further preferably not lower than 90% by mass, and may be 100% by mass.

The present application claims priority based on Japanese Patent Application No. 2020-174488 filed on October 16, 2020. All the contents described in Japanese Patent Application No. 2020-174488 are incorporated herein by reference.

EXAMPLES

Hereinafter, the present invention is more specifically described by way of examples. The present invention is not limited by the following examples.

Each measured value described in Examples and Comparative Examples was measured by the following method. In addition, unless otherwise specified, "a part" means "a mass part" and "a mol" means "a mole part".

Polymerization Example of Polymer Polyol (A1-1)

To a reaction vessel equipped with a stirrer, a thermometer, and a distillation cooler, 30 parts by mole of terephthalic acid, 69 parts by mole of isophthalic acid, 1 part by mole of trimellitic anhydride, 15 parts by mole of 2-methyl-1,3-butanediol, 85 parts by mole of 1,6-hexanediol, and 0.2 parts by mole of tetrabutyl titanate were added, the temperature of the mixture was gradually increased to 250°C, and an esterification reaction was carried out while removing distilled water from the system. After the esterification reaction was completed, initial polymerization was carried out while gradually reducing the pressure to 10 mmHg, the temperature was increased to 250°C, and late polymerization was further carried out at 1 mmHg or lower until a predetermined torque was reached. Thereafter, the pressure was returned to normal pressure by nitrogen, 1 part by mole of trimellitic anhydride was added, and a reaction was carried out at 220°C for 30 minutes to obtain a polymer polyol (A1-1). The composition and property values of the polymer polyol (A1-1) thus obtained are shown in Table 1. Each measurement and evaluation item followed the method described later.

Polymerization Example of Polymer Polyol (A1-2)

To a reaction vessel equipped with a stirrer, a thermometer, and a distillation cooler, 50 parts by mole of terephthalic acid, 50 parts by mole of isophthalic acid, 55 parts by mole of ethylene glycol, 45 parts by mole of 2,2-dimethyl-1,3-propanediol, and 0.2 parts by mole of tetrabutyl titanate were added, the temperature of the mixture was gradually increased to 250°C, and an esterification reaction was carried out while removing distilled water from the system. After the esterification reaction was completed, initial polymerization was carried out while gradually reducing the pressure to 10 mmHg, the temperature was increased to 250°C, and late polymerization was further carried out at 1 mmHg or lower until a predetermined torque was reached to obtain a polymer polyol (A1-2). The composition and property values of the polymer polyol (A1-2) thus obtained are shown in Table 1. Each measurement and evaluation item followed the method described later.

Polymerization Example of Polymer Polyol (A1-3)

To a reaction vessel equipped with a stirrer, a thermometer, and a distillation cooler, 50 parts by mole of terephthalic acid, 49 parts by mole of isophthalic acid, 1 part by mole of trimellitic anhydride, 83 parts by mole of 2-methyl-1,3-butanediol, 17 parts by mole of 1,4-butanediol, and 0.2 parts by mole of tetrabutyl titanate were added, the temperature of the mixture was gradually increased to 250°C, and an esterification reaction was carried out while removing distilled water from the system. After the esterification reaction was completed, initial polymerization was carried out while gradually reducing the pressure to 10 mmHg, the temperature was increased to 250°C, and late polymerization was further carried out at 1 mmHg or lower until a predetermined torque was reached. Thereafter, the pressure was returned to normal pressure by nitrogen, 1 part by mole of trimellitic anhydride was added, and a reaction was carried out at 220°C for 30 minutes to obtain a polymer polyol (A1-3). The composition and property values of the polymer polyol (A1-3) thus obtained are shown in Table 1. Each measurement and evaluation item followed the method described later.

Polymerization Example of Polymer Polyol (A1-4)

To a reaction vessel equipped with a stirrer, a thermometer, and a distillation cooler, 40 parts by mole of terephthalic acid, 39 parts by mole of isophthalic acid, 20 parts by mole of adipic acid, 1 part by mole of trimellitic anhydride, 58 parts by mole of 2-methyl-1,3-butanediol, 42 parts by mole of 1,4-butanediol, and 0.2 parts by mole of tetrabutyl titanate were added, the temperature of the mixture was gradually increased to 250°C, and an esterification reaction was carried out while removing distilled water from the system. After the esterification reaction was completed, initial polymerization was carried out while gradually reducing the pressure to 10 mmHg, the temperature was increased to 250°C, and late polymerization was further carried out at 1 mmHg or lower until a predetermined torque was reached. Thereafter, the pressure was returned to normal pressure by nitrogen, 1 part by mole of trimellitic anhydride was added, and a reaction was carried out at 220°C for 30 minutes to obtain a polymer polyol (A1-4). The composition and property values of the polymer polyol (A1-4) thus obtained are shown in Table 1. Each measurement and evaluation item followed the method described later.

Polymerization Example of Polymer Polyol (A1-5)

To a reaction vessel equipped with a stirrer, a thermometer, and a distillation cooler, 30 parts by mole of terephthalic acid, 64 parts by mole of isophthalic acid, 5 parts by mole of sebacic acid, 1 part by mole of trimellitic anhydride, 28 parts by mole of 2-methyl-1,3-butanediol, 55 parts by mole of 1,4-butanediol, 17 parts by mole of 1,4-cyclohexanedimethanol, and 0.2 parts by mole of tetrabutyl titanate were added, the temperature of the mixture was gradually increased to 250°C, and an esterification reaction was carried out while removing distilled water from the system. After the esterification reaction was completed, initial polymerization was carried out while gradually reducing the pressure to 10 mmHg, the temperature was increased to 250°C, and late polymerization was further carried out at 1 mmHg or lower until a predetermined torque was reached. Thereafter, the pressure was returned to normal pressure by nitrogen, 1 part by mole of trimellitic anhydride was added, and a reaction was carried out at 220°C for 30 minutes to obtain a polymer polyol (A1-5). The composition and property values of the polymer polyol (A1-5) thus obtained are shown in Table 1. Each measurement and evaluation item followed the method described later.

As the polymer polyol (T5652), polycarbonate diol "T5652" (number average molecular weight: 2000) manufactured by Asahi Kasei Corporation was used.

Example of synthesis of aromatic polyester resin (A-1) having a carboxy group on a side chain

To a reaction vessel equipped with a stirrer, a thermometer, and a reflux tube, 80 parts of the polymer polyol (A1-1), 20 parts of the polymer polyol (A1-2), 2.6 parts of pyromellitic dianhydride, and 100 parts of toluene were added, and the mixture was dissolved in toluene while gradually increasing the temperature of the mixture to 80°C. After the dissolution was completed, 0.05 parts of triethylamine was added as a reaction catalyst, then the temperature of the mixture was gradually increased to 105°C, and a reaction was carried out for 24 hours. After the completion of the reaction was confirmed by IR (infrared spectroscopy), 54 parts of toluene was added to dilute the solution to obtain a solution in which the solid concentration of an aromatic polyester resin (A-1) having a carboxy group on a side chain was 40%. The composition and property values of the aromatic polyester resin (A-1) having a carboxy group on a side chain thus obtained are shown in Table 2.

Example of synthesis of aromatic polyester resin (A-2) having a carboxy group on a side chain

To a reaction vessel equipped with a stirrer, a thermometer, and a reflux tube, 80 parts of the polymer polyol (A1-3), 20 parts of the polymer polyol (A1-2), 2.6 parts of pyromellitic dianhydride, and 100 parts of toluene were added, and the mixture was dissolved in toluene while gradually increasing the temperature of the mixture to 80°C. After the dissolution was completed, 0.05 parts of triethylamine was added as a reaction catalyst, then the temperature of the mixture was gradually increased to 105°C, and a reaction was carried out for 24 hours. After the completion of the reaction was confirmed by IR (infrared spectroscopy), 54 parts of toluene was added to dilute the solution to obtain a solution in which the solid concentration of an aromatic polyester resin (A-2) having a carboxy group on a side chain was 40%. The composition and property values of the aromatic polyester resin (A-2) having a carboxy group on a side chain thus obtained are shown in Table 2.

The polymer polyol (A1-2) was used as an aromatic polyester resin (A-3).

Preparation of aromatic polyester resin (A-4) having a carboxy group on a side chain

To a 50 ml glass flask equipped with a stirrer, 25 parts by mole of maleic acid, 25 parts by mole of adipic acid, 50 parts by mole of bis-2-hydroxyethyl terephthalate (BHET), and 0.5 parts by mole of scandium triflate were added, and the mixture was made uniform at 100°C. After the dissolution of the materials, the inside of the system was gradually depressurized to 5 mmHg over 30 minutes, and a polycondensation reaction was further carried out at 110°C for 4 hours under a vacuum of 0.3 mmHg or less. Then, the contents were removed and cooled. Thereafter, Michael addition between the double bond site of the maleic acid and the thiol group of the thioglycolic acid was performed to prepare an aromatic polyester resin (A-4) having a carboxy group on a side chain and having a carboxy group at multiple points on a side chain. The composition and property values of the aromatic polyester resin (A-4) having a carboxy group on a side chain thus obtained are shown in Table 3.

Preparation of aromatic polyester resin (A-5) having a carboxy group on a side chain

An aromatic polyester resin (A-5) having a carboxy group on a side chain was synthesized in the same manner as the aromatic polyester resin (A-4) having a carboxy group on a side chain, except that the addition ratio was changed, and the aromatic polyester resin (A-5) was evaluated in the same manner as the aromatic polyester resin (A-4) having a carboxy group on a side chain. The evaluation results are shown in Table 3.

Example of synthesis of aromatic polyester resin (A-6) having a carboxy group on a side chain

To a reaction vessel equipped with a stirrer, a thermometer, and a reflux tube, 70 parts of the polymer polyol (A1-4), 30 parts of the polymer polyol (A1-2), 2.5 parts of pyromellitic dianhydride, and 100 parts of toluene were added, and the mixture was dissolved in toluene while gradually increasing the temperature of the mixture to 80°C. After the dissolution was completed, 0.05 parts of triethylamine was added as a reaction catalyst, then the temperature of the mixture was gradually increased to 105°C, and a reaction was carried out for 24 hours. After the completion of the reaction was confirmed by IR, 54 parts of toluene was added to dilute the solution to obtain a solution in which the solid concentration of an aromatic polyester resin (A-6) having a carboxy group on a side chain was 40%. The composition and property values of the aromatic polyester resin (A-6) having a carboxy group on a side chain thus obtained are shown in Table 2.

Example of synthesis of aromatic polyester resin (A-7) having a carboxy group on a side chain

To a reaction vessel equipped with a stirrer, a thermometer, and a reflux tube, 80 parts of the polymer polyol (A1-5), 20 parts of polycarbonate diol "T5652" manufactured by Asahi Kasei Corporation, 2.8 parts of pyromellitic dianhydride, and 100 parts of toluene were added, and the mixture was dissolved in toluene while gradually increasing the temperature of the mixture to 80°C. After the dissolution was completed, 0.05 parts of triethylamine was added as a reaction catalyst, then the temperature of the mixture was gradually increased to 105°C, and a reaction was carried out for 24 hours. After the completion of the reaction was confirmed by IR, 54 parts of toluene was added to dilute the solution to obtain a solution in which the solid concentration of an aromatic polyester resin (A-7) having a carboxy group on a side chain was 40%. The composition and property values of the aromatic polyester resin (A-7) having a carboxy group on a side chain thus obtained are shown in Table 2.

[Table 1]

| | Component | Name of substance | Polymer polyol | | | | |
|---|---|---|---|---|---|---|---|
| | | | A1-1 | A1-2 | A1-3 | A1-4 | A1-5 |
| Composition (mole part) | Polycarboxylic acid component | terephthalic acid | 30 | 50 | 50 | 40 | 30 |
| | | isophthalic acid | 69 | 50 | 49 | 39 | 64 |
| | | adipic acid | | | | 20 | |
| | | sebacic acid | | | | | 5 |
| | | trimellitic anhydride | 1 | | 1 | 1 | 1 |
| | Polyalcohol component | ethylene glycol | | 55 | | | |
| | | 2,2-dimethyl-1,3-propanediol | | 45 | | | |
| | | 2-methyl-1,3-butanediol | 15 | | 83 | 58 | 28 |
| | | 1,4-butanediol | | | 17 | 42 | 55 |
| | | 1,6-hexanediol | 85 | | | | |
| | | 1,4-cyclohexanedimethanol | | | | | 17 |
| | Addition acid | trimellitic anhydride | 1 | | 1 | 1 | |
| Property | | Number average molecular weight (Mn) | 15000 | 3000 | 12000 | 12000 | 14000 |
| | | Acid value (mgKOH/g) | 5.1 | 0.3 | 5.6 | 6.5 | 0.3 |
| | | Glass transition temperature (°C) | 7 | 55 | 40 | 10 | 30 |

[Table 2]

| Polyester resin (A) having a carboxy group | | A-1 | A-2 | A-3 | A-6 | A-7 |
|---|---|---|---|---|---|---|
| Polymer polyol (A1) (mass part) | A1-1 | 80 | | | | |
| | A1-3 | | 80 | | | |
| | A1-4 | | | | 70 | |
| | A 1-5 | | | | | 80 |
| Polymer polyol (A2) (mass part) | A1-2 | 20 | 20 | 100 | 30 | |
| | T5652 | | | | | 20 |
| Chain extender (mass part) | pyromellitic dianhydride | 2.6 | 2.6 | | 2.5 | 2.8 |

(continued)

| Polyester resin (A) having a carboxy group | A-1 | A-2 | A-3 | A-6 | A-7 |
|---|---|---|---|---|---|
| Number average molecular weight (Mn) | 16000 | 12000 | 3000 | 12000 | 14000 |
| Acid value (mgKOH/g) | 17 | 17 | 0.3 | 18 | 18 |
| Number of carboxy groups per molecular chain ($N_{COOH}$) | 4.8 | 3.6 | 0.02 | 3.9 | 4.5 |
| Glass transition temperature (°C) | 15 | 46 | 55 | 20 | 10 |

[Table 3]

| Polyester resin (A) having a carboxy group | | A-4 | A-5 |
|---|---|---|---|
| Polycarboxylic acid component (mole part) | maleic acid | 25 | 50 |
| | adipic acid | 25 | |
| Polyalcohol component (mole part) | BHET | 50 | 50 |
| Michael addition component (mole part) | thioglycolic acid | 25 | 50 |
| Number average molecular weight (Mn) | | 8000 | 10000 |
| Acid value (mgKOH/g) | | 89 | 132 |
| Number of carboxy groups per molecular chain ($N_{COOH}$) | | 12.7 | 23.5 |
| Glass transition temperature (°C) | | 1 | 27 |

<Number Average Molecular Weight (Mn)>

Each sample [polymer polyols (A1-1 to A1-5), aromatic polyester resins (A-1 to A-7) having a carboxy group on a side chain] was dissolved or diluted in tetrahydrofuran such that the sample concentration was about 0.5% by mass, and the resulting solution was filtered through a polytetrafluoroethylene membrane filter having a pore diameter of 0.5 μm to obtain a filtrate as a sample for measurement. The number average molecular weight was measured by gel permeation chromatography using tetrahydrofuran as a mobile phase and a differential refractometer as a detector. The flow rate was set to 1 mL/min, and the column temperature was set to 30°C. The columns used were KF-802, 804L, and 806L manufactured by Showa Denko K.K. Monodisperse polystyrene was used as a molecular weight standard. However, when the sample was not dissolved in tetrahydrofuran, N,N-dimethylformamide was used instead of tetrahydrofuran. Low molecular weight compounds (oligomers, etc.) having a number-average molecular weight less than 1000 were not counted and were omitted.

<Acid Value>

Each sample [polymer polyols (A1-1 to A1-5), aromatic polyester resins (A-1 to A-7) having a carboxy group on a side chain] of 0.2 g was dissolved in 20 ml of chloroform, and titration was performed with a 0.1 N potassium hydroxide ethanol solution using phenolphthalein as an indicator. From the titer, the acid value (mg KOH/g) was calculated by converting the number of mg of KOH consumed for the neutralization into the amount per 1 g of the resin.

<Number of Carboxy Groups>

The number of carboxy groups can be calculated by the following method. As an example, when the result of the acid value was A (mg KOH/g), since the molecular weight of KOH is 56.1 g/mol, the number of moles of carboxy groups per 1 g of the aromatic polyester resin (A) having a carboxy group on a side chain can be represented as A/56.1 (mmol/g). When the number average molecular weight of the aromatic polyester resin (A) having a carboxy group on a side chain is B (g), the carboxy groups in the polymer can be represented as $A/56.1 \times B/1000$ (mol), which was defined as the number of carboxy groups per polymer chain ($N_{COOH}$).

<Glass Transition Temperature>

To a differential scanning calorimeter "DSC220 model" manufactured by Seiko Instruments Inc., 5 mg of each sample [polymer polyols (A1-1 to A1-5), aromatic polyester resins (A-1 to A-7) having a carboxy group on a side chain] was added in an aluminum pan, and the pan was sealed by pressing a lid thereon, and held at 250°C for 5 minutes once. Then, the pan was rapidly cooled by liquid nitrogen, and then measurement was performed from -100°C to 300°C at a temperature increase rate of 20°C/min. The inflection point of the obtained curve was defined as a glass transition temperature.

Example 1

A crosslinked aromatic polyester resin composition having a film shape (hereinafter, referred to as crosslinked aromatic polyester resin film) was produced as follows.

Per 100 parts by mole of the carboxy group of the aromatic polyester resin (A-1) having a carboxy group on a side chain, 50 parts by mole of 1,4-butanediol diglycidyl ether as the epoxy compound (B) was dissolved in NMP (N-methyl-2-pyrrolidone) such that carboxy group / epoxy group = 1/1 (number of functional groups) per 100 parts by mole of the carboxy group. Next, 20 parts by mole of transesterification catalyst $Zn(OAc)_2$ was separately dissolved in NMP (N-methyl-2-pyrrolidone). These two solutions were mixed in a Teflon (registered trademark) mold, and then the solvent was volatilized at 40°C on a heater. The mixed sample was heated at 140°C for 3 hours to obtain a crosslinked aromatic polyester resin film (thickness: 0.7 mm). The results are shown in Table 4.

Examples 2 to 8, Comparative Examples 1 to 5

Examples 2 to 8 and Comparative Examples 1 to 5 were performed in the same manner as Example 1, except that the aromatic polyester resin (A-1) having a carboxy group on a side chain and the epoxy compound (B) were changed to those shown in Table 4, and the blending amounts were set as shown in Table 4. The results are shown in Table 4.

The epoxy compounds (B) showed in Table 4 are as follows.

"jER630" (trade name) (triglycidyl para-aminophenol) manufactured by Mitsubishi Chemical Corporation
Polyfunctional epoxy compound "TETRAD-X" (trade name) (N,N,N',N'-tetraglycidyl-m-xylenediamine) manufactured by MITSUBISHI GAS CHEMICAL COMPANY, INC.

(Absorbance Measurement by Infrared Spectroscopy)

An infrared absorption spectrum of each of the obtained crosslinked aromatic polyester resin films was measured by an ATR method (total reflection measurement method) under the following conditions, using "Cary 660 FTIR" manufactured by Agilent Technologies, Inc. The measurement was performed with the number of integrations being 16 times. An absorbance ($A_{1730}$) around 1730 cm$^{-1}$ derived from an ester bond was defined as the value of the height of the absorption peak having an absorption maximum in a region of 1730 $\pm$ 10 cm$^{-1}$, and an absorbance ($A_{3200-3600}$) around 3200 to 3600 cm$^{-1}$ derived from a hydroxyl group was defined as the value of the height of the absorption peak having an absorption maximum in a region around 3200 to 3600 cm$^{-1}$. The baseline was defined as a line connecting foot portions on both sides of each peak having an absorption maximum. From the obtained absorbances, an absorbance ratio was obtained by the following equation.

$$(\text{Absorbance ratio}) = A_{3200\text{-}3600}/A_{1730}$$

Table 4 shows the peak position of the absorption peak having an absorption maximum in the region of 1730 $\pm$ 10 cm$^{-1}$ and the peak position of the absorption peak having an absorption maximum in the region of 3200 to 3600 cm$^{-1}$.

[Table 4-1]

| | Example 1 | Example 2 | Example 3 | Example 4 | Example 5 |
|---|---|---|---|---|---|
| Type of polyester resin (A) | A-1 | A-1 | A-2 | A-4 | A-1 |

EP 4 230 676 A1

(continued)

|  |  | Example 1 | Example 2 | Example 3 | Example 4 | Example 5 |
|---|---|---|---|---|---|---|
| Epoxy compound (B) (parts by mole/ 100 parts by mole of the carboxy group of the polyester resin) | 1,4-butanediol diglycidyl ether | 50 | 50 | 50 | 50 | - |
|  | jER630 | - | - | - | - | 33 |
|  | TETRAD-X | - | - | - | - | - |
| Transesterification catalyst (D) (parts by mole/ 100 parts by mole of the carboxy group of the polyester resin) | $Zn(OAc)_2$ | 20 | 10 | 20 | 20 | 20 |
| Absorbance ratio $A_{3200-3600}/A_{1730}$ |  | 0.014 $A_{3420}/A_{1730}$ | 0.014 $A_{3420}/A_{1730}$ | 0.015 $A_{3425}/A_{1730}$ | 0.038 $A_{3432}/A_{1730}$ | 0.018 $A_{3425}/A_{1730}$ |

[Table 4-2]

|  |  | Example 6 | Example 7 | Example 8 |
|---|---|---|---|---|
| Type of polyester resin (A) |  | A-1 | A-6 | A-7 |
| Epoxy compound (B) (parts by mole/ 100 parts by mole of the carboxy group of the polyester resin) | 1,4-butanediol diglycidyl ether | - | 50 | 50 |
|  | jER630 | - | - | - |
|  | TETRAD-X | 25 | - | - |
| Transesterification catalyst (D) (parts by mole/ 100 parts by mole of the carboxy group of the polyester resin) | $Zn(OAc)_2$ | 20 | 20 | 20 |
| Absorbance ratio $A_{3200-3600}/A_{1730}$ |  | 0.013 $A_{3425}/A_{1730}$ | 0.016 $A_{3420}/A_{1730}$ | 0.017 $A_{3420}/A_{1730}$ |

[Table 4-3]

| | | Comparative Example 1 | Comparative Example 2 | Comparative Example 3 | Comparative Example 4 | Comparative Example 5 |
|---|---|---|---|---|---|---|
| Type of polyester resin (A) | | A-3 | A-5 | A-1 | A-1 | A-1 |
| Epoxy compound (B) (parts by mole/ 100 parts by mole of the carboxy group of the polyester resin) | 1,4-butanediol diglycidyl ether | 50 | 50 | 50 | - | - |
| | jER630 | - | - | - | 33 | - |
| | TETRAD-X | - | - | - | - | 25 |
| Transesterification catalyst (D) (parts by mole/ 100 parts by mole of the carboxy group of the polyester resin) | $Zn(OAc)_2$ | 20 | 20 | - | - | - |
| Absorbance ratio $A_{3200-360C}/A_{1730}$ | | - | 0.039 $A_{3436}/A_{1730}$ | 0.014 $A_{3420}/A_{1730}$ | 0.018 $A_{3425}/A_{1730}$ | 0.013 $A_{3425}/A_{1730}$ |

(Softening Temperature)

The softening temperature was obtained from the inflection point of the linear expansion coefficient change of each sample (crosslinked aromatic polyester resin film) from room temperature to 300°C using "TMA7100" manufactured by Hitachi, Ltd. The measurement was performed in a nitrogen gas atmosphere while applying a minute constant tension (30 mN) in order to prevent deflection of the sample. The initial distance between jigs was 15 mm. When an inflection point was observed, the corresponding temperature is shown, and when no inflection point was observed, "-" is shown.

(Self-Adhesiveness)

Ends of two crosslinked aromatic polyester resin films (4 mm wide × 2 cm long × 0.7 mm thick) were stacked on each other by approximately 1 cm, and a two-layer crosslinked aromatic polyester resin film was produced at a temperature equal to or higher than the softening temperature by pressing at a pressure of 400 kPa for 2 hours. When the lamination portions of the two layers adhered to each other, the self-adhesiveness was evaluated as ∘, and when lamination portions of the two layers did not adhere to each other, the self-adhesiveness was evaluated as ×.

(Remoldability)

Each crosslinked aromatic polyester resin film (4 mm wide × 2 cm long × 0.7 mm thick) was wrapped around a spatula, fixed to the spatula at both ends thereof with tape, and subjected to a heat treatment process. In the heat treatment process, the film was left at a high temperature (softening temperature + about 20°C) for 2 hours and allowed to cool to room temperature. After cooling, the deformed crosslinked polyester resin film was removed from the spatula. The case where the deformed crosslinked aromatic polyester resin film maintained its wrapped state when removed from the spatula was evaluated as ∘ for remoldability, and the case where the deformed crosslinked aromatic polyester resin film did not maintain its wrapped state and returned to the original flat state when removed from the spatula was evaluated as × for remoldability. In addition, the case where a part of the crosslinked aromatic polyester resin film melted and it was impossible to evaluate the crosslinked aromatic polyester resin film was indicated as "-".

(Scratch-Repairing Properties)

On the surface of each crosslinked aromatic polyester resin film (1.5 cm long × 1.5 cm wide × 0.7 mm thick), a scratch (a depth of about 0.1 mm) was made using a cutter. Then, the crosslinked aromatic polyester resin film was subj ected to a heat treatment process. In the heat treatment process, the film was left at a high temperature (softening temperature + about 20°C) for 10 minutes and allowed to cool to room temperature. The case where after the heat treatment process was performed, the scratch disappeared and the crosslinked aromatic polyester resin film became a film having no scratch on the surface was evaluated as ∘ for repairing properties (self-repairing properties), and the case where the scratch remained after the heat treatment process was performed was evaluated as × for scratch repairing properties (self-repairing properties). In addition, the case where a part of the crosslinked aromatic polyester resin film melted and it was impossible to evaluate the crosslinked aromatic polyester resin film was indicated as "-".

(5% Weight Loss Temperature)

Measurement was performed using a thermal analyzer "DTG-60" manufactured by Shimadzu Corporation. Each sample (crosslinked aromatic polyester resin film) of 10 g was placed in an aluminum pan, and the weight loss was measured when the temperature was increased from room temperature to 400°C at 5°C/min. The temperature at which the weight was reduced by 5% (5% weight loss temperature) was used an index of heat resistance.

(90° Peel Strength)

A test piece having a length of 20 mm and a width of 50 mm was cut out from each of the obtained crosslinked aromatic polyester resin films (thickness of 0.7 mm). The cut-out test piece was placed on a PET film having a thickness of 25 μm (manufactured by Toyobo Co., Ltd.), and the same type of PET film was placed on the test piece to form a three-layer structure of "PET film/crosslinked aromatic polyester resin film/PET film". Each layer was adhered by pressurizing and heating at 170°C and 2 MPa for 280 seconds in a heat press machine. The laminate obtained through the adhesion was used as a 90° peel strength evaluation sample.

Moreover, a 90° peel strength evaluation sample was produced under the same conditions, except that instead of the above PET film, a polyimide film (PI, "APICAL" (registered trademark) manufactured by KANEKA CORPORATION, thickness of 12.5 μm) was used to form a three-layer structure of"PI/crosslinked aromatic polyester resin film/PI". For the crosslinked aromatic polyester resin films obtained in Example 5 and Example 6, samples produced with the heating temperature in the heat press machine being changed to 200°C were also prepared.

Moreover, a 90° peel strength evaluation sample was produced under the same conditions, except that instead of the above PET film, a rolled copper foil (thickness of 20 $\mu$m) and a polyimide film (PI, "APICAL" (registered trademark) manufactured by KANEKA CORPORATION, thickness of 12.5 $\mu$m) were used to form a three-layer structure of "Cu/crosslinked aromatic polyester resin film/PI". For the crosslinked aromatic polyester resin films obtained in Example 5 and Example 6, samples produced with the heating temperature in the heat press machine being changed to 200°C were also prepared.

The 90° peel strength was measured at 25°C and a tensile speed of 50 mm/min using Autograph AG-Xplus manufactured by Shimadzu Corporation. The adhesiveness of each film was evaluated based on the measured 90° peel strength according to the following criteria. The evaluation results are shown in Table 5 below. "-" means that the evaluation was not performed.

<Evaluation Criteria>

∞: Not less than 1.0 N/mm
∘: Not less than 0.5 N/mm and less than 1.0 N/mm
Δ: Not less than 0.35 N/mm and less than 0.5 N/mm
×: Less than 0.35 N/mm

(Molding Processability)

A mold was filled with a sample obtained by cutting each of the obtained crosslinked aromatic polyester resin films (thickness of 0.7 mm) into a shape having a width of 5 mm and a length of 5 mm. As the mold, one made by cutting out a circle having a diameter of 8 mm from a Teflon (registered trademark) sheet having a thickness of 1 mm was used. Then, the mold was pressurized and heated in a heat press machine. The pressurization condition was set to 4 MPa, and the heating condition was set to softening temperature +30°C, 15 min. The case where the crosslinked aromatic polyester resin film piece was successfully molded into a mold shape was evaluated as o for molding processability, and the case where the crosslinked aromatic polyester resin film piece failed to be molded into a mold shape was evaluated as × for molding processability. The evaluation results are shown in Table 5 below. "-" means that the evaluation was not performed.

(Extrudability)

A sample obtained by cutting 6 g of each of the obtained crosslinked aromatic polyester resin films (thickness of 0.7 mm) into a shape having a width of 5 mm and a length of 5 mm was fed in three separate parts at a barrel temperature of 150°C into a twin-screw extruder "MiniLab" manufactured by HAAKE. After the sample feeding was completed, the sample was kneaded at a screw rotation speed of 50 min$^{-1}$ for 5 minutes, and then the kneaded material was extruded from the barrel. The case where after kneading, the kneaded material was successfully discharged to obtain a thread thread-like molded article was evaluated as o for extrudability, and the case where the kneaded material failed to be discharged and a thread thread-like molded article was not obtained was evaluated as × for extrudability. The evaluation results are shown in Table 5 below. "-" means that the evaluation was not performed.

(Solder Heat Resistance)

Each of the obtained crosslinked aromatic polyester resin films and a glossy surface of a rolled copper foil that was a copper-clad laminated sheet having a thickness of 49 $\mu$m (ESPANEX series, Cu/polyimide/Cu = 12 $\mu$m/25 $\mu$m/12 $\mu$m, manufactured by NIPPON STEEL Chemical & Material Co., Ltd.) were attached together so as to be in contact with each other. The film and the foil were adhered to each other by pressing under a pressure of 20.4 kgf/cm$^2$ at 170°C for 280 seconds to obtain a laminate sample for solder heat resistance evaluation. If the softening temperature of the crosslinked aromatic polyester resin film was not lower than 150°C and the film and the foil were not sufficiently adhered to each other at a pressing temperature of 170°C, a laminate sample was produced with the pressing temperature being increased to 180°C or 200°C. A test piece of 2.0 cm × 2.0 cm was cut out from the obtained laminate sample, and was floated for 1 minute in a solder bath whose bath temperature was adjusted from 250°C to 280°C in 10°C increments, and the upper limit temperature at which no swelling occurred was measured. That is, the test piece was floated for 1 minute in a solder bath whose bath temperature was 250°C, and when no swelling occurred, the test piece was floated for 1 minute in a solder bath whose bath temperature was 260°C, 270°C, or 280°C, such floating was repeated until swelling occurred, and the upper limit temperature at which no swelling occurred was measured. The measurement results are shown in Table 5 below. A higher upper limit temperature at which no swelling occurred indicates that the solder heat resistance is better. For Example 5 and Example 6, samples produced at a pressing temperature of 170°C and samples produced at a pressing temperature of200°C were evaluated for solder heat resistance.

(Room Temperature Storage Stability)

The room temperature storage stability of each of the obtained crosslinked aromatic polyester resin films was evaluated based on a change rate of a gel fraction and softening behavior.

(1) Change Rate of Gel Fraction

First, the gel fraction of each of the obtained crosslinked aromatic polyester resin films was measured. The gel fraction was measured by the following method.

Each of the obtained crosslinked aromatic polyester resin films of 0.125 g was weighed, and immersed in 25 mL of methyl ethyl ketone at room temperature for 2 hours. Then, only the remaining gel component was dried in a vacuum dryer at 80°C for 1 hour, and the mass of the gel component was measured. The gel fraction was determined by the following equation.

$$\text{Gel fraction (\%)} = (\text{weight of remaining gel component after drying} / 0.125) \times 100$$

Next, the crosslinked aromatic polyester resin film was stored at a constant temperature of 5°C, 25°C, or 40°C for 6 months, and the gel fraction was measured by the above method when 6 months elapsed. A change rate from the gel fraction at the start of storage was calculated based on the gel fraction at the start of storage and the gel fraction after storage for 6 months. The change rate was defined as the absolute value of the difference in gel fraction (%) before and after storage for 6 months, as shown in the following equation.

$$\text{Change rate} = \text{gel fraction (\%) at elapse of 6 months} - \text{gel fraction (\%) at start of storage}$$

The case where the change rate was less than 10% was evaluated as ○, the case where the change rate was not less than 10% and not greater than 25% was evaluated as Δ, and the case where the change rate was greater than 25% was evaluated as ×. The evaluation results are shown in Table 5 below. "-" means that the evaluation was not performed.

(2) Softening Behavior

When each of the obtained crosslinked aromatic polyester resin films was stored at 25°C for 6 months, the presence or absence of softening behavior due to a bond exchange reaction was evaluated by stress relaxation measurement. As the stress relaxation measurement, a stress relaxation test was performed at temperatures of 100°C, 150°C, and 180°C using MCR302 (manufactured by Anton Paar GmbH). The test was performed in a $N_2$ gas atmosphere. As a test piece, a disk-shaped sample cut out from the above crosslinked aromatic polyester resin film and having a diameter of 8 mm and a thickness of 0.7 mm was used.

The case where softening behavior was exhibited when the stress relaxation test was performed at any of the temperatures of 100°C, 150°C, and 180°C even after storage at 25°C for 6 months was evaluated as ○, and the case where no softening behavior was exhibited when the stress relaxation test was performed at any of the temperatures of 100°C, 150°C, and 180°C after storage at 25°C for 6 months was evaluated as ×. The evaluation results are shown in Table 5 below. The fact that stress relaxation is observed after storage at 25°C for 6 months indicates that the softening properties due to bond exchange are maintained even after storage and remain unchanged from the initial behavior during the storage at room temperature for a long period of time.

(Solvent Resistance)

One sample obtained by cutting each of the obtained crosslinked aromatic polyester resin films (thickness of 0.7 mm) into a shape having a width of 5 mm and a length of 5 mm was added to one screw bottle. Three screw bottles were prepared per one level, 3 mL of ethanol, dimethylformamide (DMF), or tetrahydrofuran (THF) was added to each screw bottle, and the screw bottles were allowed to stand at room temperature for 5 hours. The case where after standing for 5 hours, there was no change from before immersion was evaluated as having good solvent resistance "oo", the case where the sample swelled but was not dissolved was evaluated as having solvent resistance "o", and the case where the sample was dissolved was evaluated as having no solvent resistance "×" The evaluation results are shown in Table 5 below. "-" means that the evaluation was not performed.

(90° peel strength upon heating)

For "Cu/crosslinked aromatic polyester resin film/PI" among the above 90° peel strength evaluation samples, the 90° peel strength upon heating was measured using a thermostatic chamber (THERMOSTATIC CHAMBER, manufactured by Shimadzu Corporation) at a temperature that was the softening temperature of each sample shown in Table 5 + 30°C. The 90° peel strength was measured, using Autograph AG-Xplus manufactured by Shimadzu Corporation, at a tensile speed of 50 mm/min and a temperature that was softening temperature of each sample + 30°C. The peelability of the laminate was evaluated based on the measured 90° peel strength upon heating according to the following criteria. The evaluation results are shown in Table 5 below. "-" means that the evaluation was not performed.

<Evaluation Criteria>

∞: Less than 3.5 N/mm
∘: Not less than 0.35 N/mm and less than 0.5 N/mm
Δ: Not less than 0.5 N/mm and less than 1.0 N/mm
×: Not less than 1.0 N/mm

The crosslinked aromatic polyester resin film obtained in Example 1 was cut into a fine resin shape (5 mm wide × 5 mm long × 0.7 mm thick), melted at 200°C, discharged into cooling water at a single-hole discharge rate of 1.0 g/min through a nozzle having round solid-shaped orifices having a hole diameter of 1.0 mm and arranged at intervals of 4 mm in a nozzle effective surface having a width of 40 cm and a length of 4 cm, and solidified therein. Specifically, the cooling water was placed 10 cm below the discharge position, and stainless steel endless nets having a width of 50 cm were placed parallel to each other at an interval of 3 cm to form a pair of take-up conveyors partially exposed over a water surface. The melted material was taken up on the conveyors, while being welded on the contacted parts, and sandwiched from both sides. The sandwiched material was introduced into the cooling water at a speed of 1.0 m/min to be solidified. Then, the solidified material was dried in a hot-air dryer at 70°C for 15 minutes, and then cut into a predetermined size. As a result, a reticular structure having a thickness of 3 cm and a density of 0.060 g/cm$^3$ was obtained.

[Table 5-1]

| | Example 1 | Example 2 | Example 3 | Example 4 | Example 5 | |
|---|---|---|---|---|---|---|
| Softening temperature (°C) | 120 | 150 | 160 | 150 | 170 | |
| Self-adhesiveness | ○ | ○ | ○ | ○ | ○ | |
| Remoldability | ○ | ○ | ○ | ○ | ○ | |
| Scratch-repairing properties | ○ | ○ | ○ | ○ | ○ | |
| 5% weight loss temperature (°C) | >300 | >300 | >300 | 230 | >300 | |
| 90° peel strength PET/PET | ○○ | ○○ | Δ | ○ | - | |
| 90° peel strength PI/PI | ○○ | ○○ | Δ | ○ | 170°C Δ | 200°C ○ |
| 90° peel strength Cu/PI | ○○ | ○○ | Δ | ○ | 170°C ○ | 200°C ○○ |
| Molding processability | ○ | ○ | ○ | ○ | ○ | |
| Extrudability | ○ | ○ | ○ | ○ | ○ | |
| Solder heat resistance (°C) | 280 | 280 | 270 | 250 | 250 | 270 |

(continued)

| | Example 1 | Example 2 | Example 3 | Example 4 | Example 5 |
|---|---|---|---|---|---|
| Room temperature storage stability (gel fraction) storage at 5°C | ○ | ○ | ○ | ○ | ○ |
| Room temperature storage stability (gel fraction) storage at 25°C | ○ | ○ | ○ | ○ | ○ |
| Room temperature storage stability (gel fraction) storage at 40°C | ○ | ○ | ○ | ○ | ○ |
| Room temperature storage stability (Presence or absence of softening behavior) | ○ | ○ | ○ | ○ | ○ |
| Solvent resistance (ethanol) | ○○ | ○○ | ○○ | ○○ | ○○ |
| Solvent resistance (DMF) | ○ | ○ | ○ | ○ | ○○ |
| Solvent resistance (THF) | ○ | ○ | ○ | ○ | ○○ |
| 90° peel strength upon heating (heating temperature) (°C) | 150 | 180 | 190 | 180 | 200 |
| 90° peel strength upon heating | ○○ | ○○ | ○○ | ○○ | ○○ |

[Table 5-2]

| | Example 6 | | Example 7 | Example 8 |
|---|---|---|---|---|
| Softening temperature (°C) | 180 | | 160 | 150 |
| Self-adhesiveness | ○ | | ○ | ○ |
| Remoldability | ○ | | ○ | ○ |
| Scratch-repairing properties | ○ | | ○ | ○ |
| 5% weight loss temperature (°C) | >300 | | >300 | >300 |
| 90° peel strength PET/PET | - | | ○○ | ○○ |
| 90° peel strength PI/PI | 170°C △ | 200°C ○ | ○○ | ○○ |
| 90° peel strength Cu/PI | 170°C ○ | 200°C ○ | ○○ | ○○ |
| Molding processability | ○ | | ○ | ○ |
| Extrudability | ○ | | ○ | ○ |
| Solder heat resistance (°C) | 250 | 280 | 280 | 280 |
| Room temperature storage stability (gel fraction) storage at 5°C | ○ | | ○ | ○ |
| Room temperature storage stability (gel fraction) storage at 25°C | ○ | | ○ | ○ |
| Room temperature storage stability (gel fraction) storage at 40°C | ○ | | ○ | ○ |
| Room temperature storage stability (Presence or absence of softening behavior) | ○ | | ○ | ○ |
| Solvent resistance (ethanol) | ○○ | | ○○ | ○○ |
| Solvent resistance (DMF) | ○○ | | ○ | ○ |
| Solvent resistance (THF) | ○○ | | ○ | ○ |
| 90° peel strength upon heating(heating temperature) (°C) | 210 | | 190 | 180 |
| 90° peel strength upon heating | ○○ | | ○○ | ○○ |

[Table 5-3]

| | Comparative Example 1 | Comparative Example 2 | Comparative Example 3 | Comparative Example 4 | Comparative Example 5 |
|---|---|---|---|---|---|
| Softening temperature (°C) | - | >200 | - | - | - |
| Self-adhesiveness | - | × | × | × | × |
| Remoldability | - | × | × | × | × |
| Scratch-repairing properties | - | × | × | × | × |
| 5% weight loss temperature (°C) | 50 | 220 | >300 | >300 | >300 |
| 90° peel strength PET/PET | - | - | - | - | - - |
| 90° peel strength PI/PI | - | - | - | - | - - |
| 90° peel strength Cu/PI | - | - | - | - | - - |
| Molding processability | - | - | - | - | - - |
| Extrudability | - | - | - | - | - - |
| Solder heat resistance (°C) | - | - | - | - | - |
| Room temperature storage stability (gel fraction) storage at 5°C | - | - | - | - | - |
| Room temperature storage stability (gel fraction) storage at 25°C | - | - | - | - | - |
| Room temperature storage stability (gel fraction) storage at 40°C | - | - | - | - | - |
| Room temperature storage stability (Presence or absence of softening behavior) | - | - | - | - | - |
| Solvent resistance (ethanol) | - | - | - | - | - - |
| Solvent resistance (DMF) | - | - | - | - | - - |
| Solvent resistance (THF) | - | - | - | - | - - |
| 90° peel strength upon heating(heating temperature) (°C) | - | - | - | - | - |
| 90° peel strength upon heating | - | - | - | - | - |

Examples 1, 3, and 4

The crosslinked aromatic polyester resin films of Examples 1, 3, and 4 are each example in which 50 parts by mole of the epoxy compound (B) per 100 parts by mole of the carboxy group of the polyester resin (A-1, A-2, A-4) (carboxy group / epoxy group = 1/1 (number of functional groups) per 100 parts by mole of the carboxy group) and 20 parts by mole of zinc acetate were mixed, and properties such as softening due to ester bond exchange, self-adhesiveness, remoldability, and scratch-repairing properties were exhibited.

Example 2

The crosslinked aromatic polyester resin film of Example 2 is an example in which zinc acetate which was used in 20 parts by mole in Example 1 was reduced to 10 parts by mole, and the softening temperature was increased from 120°C to 150°C. It is considered that the ester bond exchange activity was decreased since the addition amount of the transesterification catalyst was small.

Examples 5 and 6

Examples 5 and 6 are each example in which a trifunctional epoxy or tetrafunctional epoxy was mixed as the epoxy compound (B) with the same polyester resin (A-1) as in Example 1 such that carboxy group / epoxy group = 1/1 (number of functional groups) per 100 parts by mole of the carboxy group of the polyester resin (A-1), and the softening temperature was increased by 50°C or higher as compared to that of Example 1. It was confirmed that as the crosslink density of the obtained crosslinked aromatic polyester resin film increased, the softening temperature thereof tended to increase.

Examples 7 and 8

The crosslinked aromatic polyester resin films of Examples 7 and 8 are each example in which 50 parts by mole of the epoxy compound (B) per 100 parts by mole of the carboxy group of the polyester resin (A-6, A-7) (carboxy group / epoxy group = 1/1 (number of functional groups) per 100 parts by mole of the carboxy group) and 20 parts by mole of zinc acetate were mixed, and properties such as softening due to ester bond exchange, self-adhesiveness, remoldability, scratch-repairing properties, and heat resistance were exhibited.

The crosslinked aromatic polyester resin films of Examples 1 to 8 had high 90° peel strength and were useful as adhesives. In addition, these crosslinked aromatic polyester resin films also had excellent molding processability, extrudability, solder heat resistance, room temperature storage stability, and solvent resistance. Moreover, these crosslinked aromatic polyester resin films had low 90° peel strength when heated to the softening temperature + 30°C, and were found to be easily peeled off.

Comparative Example 1

The polyester resin (A-3) has a polymer structure having no carboxy group on a side chain, and carboxy groups are present only at the ends thereof. Thus, three-dimensional crosslinking did not proceed, and it was impossible to perform evaluations for physical properties.

Comparative Example 2

The crosslinked aromatic polyester resin composition using the polyester resin (A-5) having a very high acid value had a high absorbance ratio, and the softening temperature and the 5% weight loss temperature thereof were substantially equal to each other. It is considered that the degradation of the crosslinked aromatic polyester resin proceeds around the softening temperature. This means that the absorbance ratio of the crosslinked aromatic polyester resin composition is high, that is, the number of secondary OH groups formed by the reaction between the epoxy group and the carboxy group on the polymer side chain is large. That is, it is considered that since the crosslink density of the crosslinked aromatic polyester resin composition was very high, it was difficult for the molecules themselves to move, and ester bond exchange was less likely to occur.

Comparative Examples 3, 4, and 5

Comparative Examples 3, 4, and 5 are each example in which the transesterification catalyst (zinc acetate) in Examples 1, 5, and 6 was not contained. When only the aromatic polyester resin having a carboxy group on a side chain and the epoxy compound were mixed and cured, the crosslinking reaction proceeded, but the ester bond exchange reaction did not proceed at high temperatures, and softening behavior, self-adhesiveness, remoldability, and scratch-repairing properties at high temperatures were not exhibited. It is considered that the polyester resins of Comparative Examples 3, 4, and 5 are general thermosetting polyester resins.

INDUSTRIAL APPLICABILITY

The crosslinked aromatic polyester resin composition of the present invention has excellent self-adhesiveness, remoldability, and scratch-repairing properties in a temperature range of not lower than the softening temperature while having heat resistance to a temperature of not lower than 230°C (especially, not lower than 300°C). Therefore, the crosslinked aromatic polyester resin composition of the present invention is particularly useful as a repeatedly-usable adhesive or a paint.

## Claims

1.  A crosslinked aromatic polyester resin composition, comprising

    a crosslinked aromatic polyester resin (C), and
    a transesterification catalyst (D), wherein
    the crosslinked aromatic polyester resin composition satisfies the following requirements (1) and (2):

    (1) the crosslinked aromatic polyester resin (C) is a reaction product of an aromatic polyester resin (A) having a carboxy group on a side chain and an epoxy compound (B), and
    (2) when the crosslinked aromatic polyester resin composition is measured by infrared spectroscopy, a ratio ($A_{3200-3600}/A_{1730}$) of an absorbance ($A_{3200-3600}$) of a peak, around wave number of 3200 to 3600 cm$^{-1}$, derived from a hydroxyl group to an absorbance ($A_{1730}$) of a peak, around wave number of 1730 cm$^{-1}$, derived from an ester bond is not lower than 0.005 and not higher than 0.038.

2.  The crosslinked aromatic polyester resin composition according to claim 1, wherein the aromatic polyester resin (A) has an acid value of not lower than 5 mg KOH/g and not higher than 120 mg KOH/g.

3.  The crosslinked aromatic polyester resin composition according to claim 1 or 2, wherein the aromatic polyester resin (A) has a number average molecular weight of not lower than 8000.

4.  The crosslinked aromatic polyester resin composition according to any one of claims 1 to 3, wherein a molar ratio (carboxy group : epoxy group) of the carboxy group of the aromatic polyester resin (A) to an epoxy group of the epoxy compound (B) is 100:50 to 100:150.

5.  The crosslinked aromatic polyester resin composition according to any one of claims 1 to 4, wherein the epoxy compound (B) has a number average molecular weight of not lower than 100 and not higher than 500.

6.  The crosslinked aromatic polyester resin composition according to any one of claims 1 to 5, wherein a molar ratio (carboxy group : transesterification catalyst) of the carboxy group of the aromatic polyester resin (A) to the transesterification catalyst (D) is 100:10 to 100:40.

7.  A method for preparing a crosslinked aromatic polyester resin composition, the method comprising mixing and heating an aromatic polyester resin (A) having a carboxy group on a side chain and having an acid value of not lower than 5 mg KOH/g and not higher than 120 mg KOH/g, an epoxy compound (B), and a transesterification catalyst (D) to perform crosslinking.

8.  A self-adhesive agent containing the crosslinked aromatic polyester resin composition according to any one of claims 1 to 6.

9.  A self-repairing material containing the crosslinked aromatic polyester resin composition according to any one of claims 1 to 6.

10. A molding material containing the crosslinked aromatic polyester resin composition according to any one of claims 1 to 6.

## INTERNATIONAL SEARCH REPORT

| International application No. |
|---|
| **PCT/JP2021/038127** |

**A. CLASSIFICATION OF SUBJECT MATTER**

**C08G 59/42**(2006.01)i; **C08K 5/098**(2006.01)i; **C08L 67/02**(2006.01)i; **C09J 167/02**(2006.01)i; **C08G 63/91**(2006.01)i
FI: C08L67/02; C09J167/02; C08G63/91; C08G59/42; C08K5/098

According to International Patent Classification (IPC) or to both national classification and IPC

**B. FIELDS SEARCHED**

Minimum documentation searched (classification system followed by classification symbols)

C08G59/42; C08K5/04-5/5399; C08L67/00-67/07; C09J167/00-167/07; C08G63/91

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 52-5849 A (YUNIITEKU CHEM., INC.) 17 January 1977 (1977-01-17) claims, page 3, lower right column, lines 15-18, page 6, upper right column, line 18 to lower right column, line 4, page 8, lower right column, line 20 to page 11, lower right column, line 12 | 1-6, 8 |
| A | | 7, 9, 10 |
| X | JP 10-87959 A (UNITIKA LTD.) 07 April 1998 (1998-04-07) claims, paragraphs [0031]-[0044] | 1-7 |
| A | | 8-10 |
| X | JP 2-142869 A (TORAY IND., INC.) 31 May 1990 (1990-05-31) claims, page 3, upper left column, lines 11-18, page 4, upper right column, line 2 to page 10, upper left column, line 4 | 1-6 |
| A | | 7-10 |
| A | JP 2014-503670 A (CENTRE NATIONAL DE LA RECHERCHE SCIENTIFIQUE, ARKEMA FRANCE) 13 February 2014 (2014-02-13) | 1-10 |
| A | JP 2018-127502 A (HITACHI, LTD.) 16 August 2018 (2018-08-16) | 1-10 |

✓ Further documents are listed in the continuation of Box C. ✓ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **17 December 2021** | **28 December 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2021/038127**

### C.    DOCUMENTS CONSIDERED TO BE RELEVANT

| Category* | Citation of document, with indication, where appropriate, of the relevant passages | Relevant to claim No. |
|---|---|---|
| A | JP 2012-507614 A (TRISTANO PTY LTD.) 29 March 2012 (2012-03-29) | 1-10 |
| A | JP 2-84475 A (SHELL INTERNATL. RES. MAATSCHAPPIJ BV) 26 March 1990 (1990-03-26) | 1-10 |
| A | WO 2020/047827 A1 (NANJING TIANSHI NEW MATERIAL TECHNOLOGIES CO., LTD) 12 March 2020 (2020-03-12) | 1-10 |
| A | HAYASHI, Mikihiro et al. Synthesis of amorphous low Tg polyesters with multiple COOH side groups and their utilization for elastomeric vitrimers based on post-polymerization cross-linking. POLYMER CHEMISTRY. 18 March 2019, vol. 10, no. 16, pages 2047-2056 particularly, fig. 1, scheme 1 | 1-10 |

Form PCT/ISA/210 (second sheet) (January 2015)

**INTERNATIONAL SEARCH REPORT**
Information on patent family members

International application No.

**PCT/JP2021/038127**

| Patent document cited in search report | | | Publication date (day/month/year) | Patent family member(s) | | Publication date (day/month/year) |
|---|---|---|---|---|---|---|
| JP | 52-5849 | A | 17 January 1977 | US 4093675 A<br>claims, column 5, lines 13-46,<br>column 8, line 63 to column<br>12, line 27<br>GB 1513203 A<br>DE 2619787 A1<br>FR 2317347 A1 | | |
| JP | 10-87959 | A | 07 April 1998 | (Family: none) | | |
| JP | 2-142869 | A | 31 May 1990 | (Family: none) | | |
| JP | 2014-503670 | A | 13 February 2014 | US 2013/0300020 A1<br>WO 2012/101078 A1<br>FR 2970712 A1<br>CN 103314030 A<br>KR 10-2013-0118372 A | | |
| JP | 2018-127502 | A | 16 August 2018 | WO 2016/178345 A1 | | |
| JP | 2012-507614 | A | 29 March 2012 | US 2012/0077905 A1<br>WO 2010/051589 A1<br>AU 2009311259 A<br>CA 2742933 A1<br>KR 10-2011-0095293 A<br>CN 102282197 A<br>NZ 593179 A<br>MY 156373 A<br>ZA 201103326 B<br>HK 1160874 A | | |
| JP | 2-84475 | A | 26 March 1990 | JP 57-16074 A<br>US 4362847 A<br>US 4427805 A<br>EP 40867 A2<br>ES 502344 A<br>ZA 8103375 A<br>AU 7085281 A | | |
| WO | 2020/047827 | A1 | 12 March 2020 | US 2021/0054208 A1 | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020045439 A
- JP 2020023591 A
- JP 2020174488 A